Europäisches Patentamt

European Patent Office

Office européen des brevets

(11) Publication number: **0 084 426**
**A2**

## (12) EUROPEAN PATENT APPLICATION

(21) Application number: **83300126.6**

(22) Date of filing: **11.01.83**

(51) Int. Cl.³: **B 29 B 1/08**
**B 29 H 1/10**

(30) Priority: **16.01.82 GB 8201206**

(43) Date of publication of application:
**27.07.83 Bulletin 83/30**

(84) Designated Contracting States:
**DE FR GB IT**

(71) Applicant: **FRANCIS SHAW PLC**
**P.O. Box 12 Corbett Street Ashton New Road**
**Manchester, M11 4BB(GB)**

(72) Inventor: **Mitchell, Stephen William**
**93 Lowercraft Road**
**Bury Lancashire BL8 3ER(GB)**

(74) Representative: **Allman, Peter John et al,**
**Marks and Clerk Scottish Life House Bridge Street**
**Manchester M3 3DP(GB)**

(54) **Mixing machines.**

(57) A mixing machine comprising a mixing chamber and at least one rotor rotatable within the mixing chamber about a predetermined axis. The mixing chamber is defined by two end plates arranged generally perpendicular to the rotor axis and two or more wall elements located between the end plates. At least one of the wall elements is rotatable about an axis parallel to the rotor axis between a first position in which facing edges of the wall elements contact each other to define a longitudinal seal and a second position in which a discharge aperture is defined between the facing edges. The wall elements make sealing contact with the end plates when the rotatable wall element as in the first position to define circumferential seals, the seals being so positioned that any material leaking from them is in direct communication with the machine surroundings and can easily escape from the vicinity of the mixing chamber.

FIG. 1

EP 0 084 426 A2

COMPLETE DOCUMENT

The present invention relates to mixing machines and in particular to mixing machines of the type which may be used for example in the mixing of rubber and plastics compounds.

Mixing machines of the type employed in the rubber and plastics industries employ at least one rotor revolving in a mixing chamber. In many cases two contra-rotating rotors are used. It has been conventional practice for many years to have a feed aperture in the top of the mixing chamber for the materials which are to be mixed and a door or doors in the bottom of the mixing chamber through which the mixed materials may be removed after the mixing cycle has been completed. The door is usually carried on a hinge and is swung into a closed position in which it forms a continuation of the mixing chamber wall. An example of such an arrangement is described in U.S. Patent No 1 530 808.

In mixing machines of the above type, it is difficult to effectively seal the cooperating faces of the door or doors and the mixing chamber. To improve the effectiveness of the seal it is known to angle the cooperating faces and to effect final sealing of the door or doors using wedges. This arrangement not only exerts a large sealing force on the angled faces but can also remove any of the loads generated during a mixing process from the door hinge. The door hinge may be designed so that the action of the tapered wedges produces a self-centering action so that good sealing on the angled face of the door can be achieved. As an example of this general type of arrangement, U.S. Patent No 1 355 305 shows an arrangement in which two doors are forced into closed position by roller wedges driven by a nut and thread assembly.

There are other known door arrangements, for example a sliding rather than a simple hinged door. U.S. Patent No 1 701 832 shows a sliding door arrangement, the door being in the form of a lining of the mixing chamber. The lining is mounted to turn about an axis parallel to the axis of the rotor so as to slide across the inside of the mixing chamber wall between a position in which it closes a fixed opening in the bottom of the mixing chamber wall and a position in which the opening is not obstructed. The problem with such a lining arrangement is that the lining and the face of the casing over which it slides must be manufactured to very close tolerances if jamming or poor sealing is to be avoided, and further more the lining can be easily jammed if material being processed leaks past the seal and gets between the lining and the casing. Leakage can occur both at the longitudinal seal between the lining and a cooperating fixed liner or at the ends of the lining. Any material which does leak remains trapped within the mixing chamber casing.

Thus, prior art arrangements consist of a door which is movable relative to the mixing chamber wall so as to either obstruct or open an aperture in the mixing chamber wall.

The machining of the mixing chamber and the door, and the fitting of the door in situ to ensure good sealing, are very expensive procedures. The resulting machine is accordingly extremely expensive to produce. Furthermore, if the door is to be able to swing or slide open without interference, there must be some clearance and this can result in serious leakage resulting in loss of product and/or jamming of the door.

It is an object of the present invention to provide an improved mixing machine.

According to the present invention, there is provided a mixing machine comprising a mixing chamber and at least one rotor rotatable within the mixing chamber about a predetermined axis, characterised in that the mixing chamber comprises two end plates arranged at opposite ends of the said axis and at least two wall elements located between the end plates, at least one of the wall elements being rotatable about an axis parallel to said predetermined axis between a first position in which facing edges of the wall elements contact each other to define a longitudinal seal and a second position in which a discharge aperture is defined between said facing edges, the wall elements making contact with the end plates when the said at least one rotatable wall element is in the first position to define circumferential seals, the said seals being positioned such that any material leaking from them is in direct communication with the machine surroundings and can easily escape from the vicinity of the mixing chamber.

Preferably two wall elements are provided each of which is rotatable. In the case of a single rotor mixing machine, both elements are preferably rotatable about the rotor axis. In the case of a double rotor mixing machine, the elements are preferably rotatable about respective rotor axes. It will be appreciated that in cases where a movable wall element has a part-cylindrical inner surface subtending an angle of more than $180^{\circ}$ at the adjacent rotor axis the wall element must be rotatable about the rotor axis to avoid movement of the wall element being prevented by contact with the rotor.

To provide a good seal between the end plates and the wall elements, means are preferably provided to force the end plates together, thereby trapping the wall elements between the end plates. This force is applied only during a mixing process and released to allow easy pivotal movement of the wall elements.

The wall elements may be supported in recesses machined into end frames which support the end plates or alternatively may be supported in apertures in separate support plates.

The construction proposed above is relatively cheap to assemble as it relies on components which do not require lengthy fitting procedures and which can be reasonably easily fabricated from available materials.

Embodiments of the present invention will now be described, by way of example with reference to the

5.

accompanying drawings, in which :-

Fig. 1 is a sectional view showing a twin rotor mixing machine according to the invention with its mixing chamber in the closed position;

Fig. 2 is a sectional view identical to Fig. 1 except for the fact that the mixing chamber is shown in the discharge position;

Fig. 3 is a sectional view on the line 3-3 of Fig. 1;

Fig. 4 is a view of the mixing chamber end plates; and

Fig. 5 is a view illustrating the mixing chamber longitudinal faces.

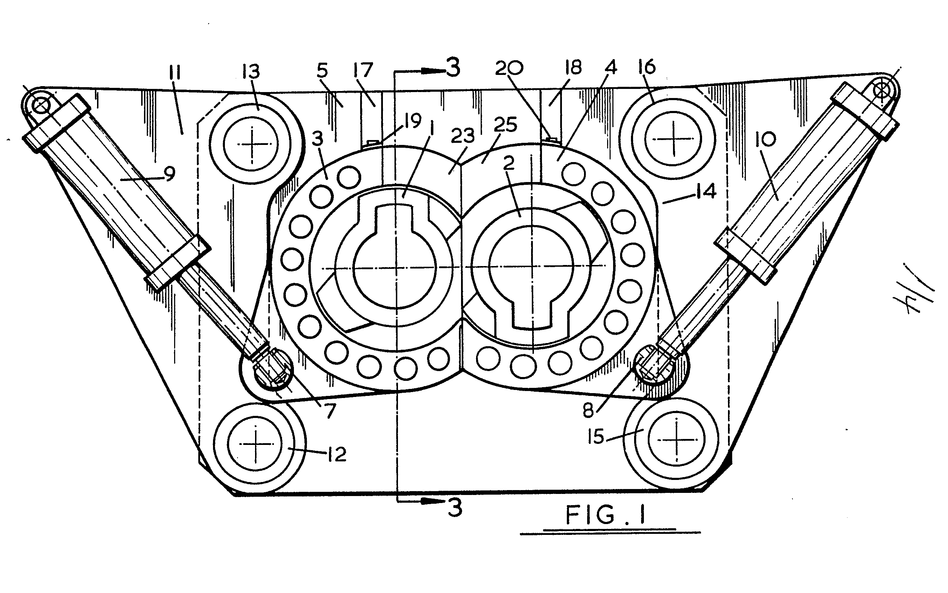

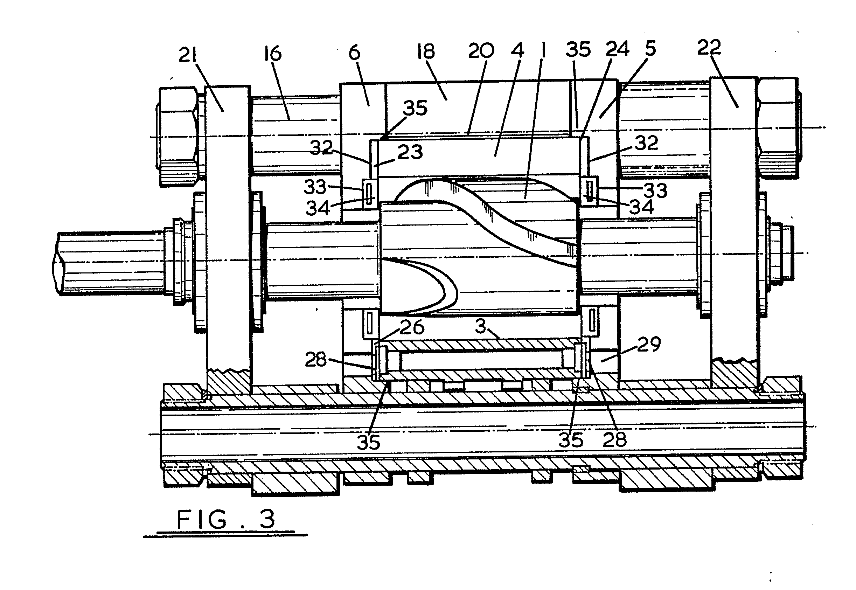

Referring to Fig. 1, this shows a cross-section through rotors 1 and 2, and a mixing chamber the side walls of which are defined by wall elements 3 and 4. The wall elements 3 and 4 are rotatable about the axes of the rotors 1 and 2 respectively, and in the position shown in Fig. 1 the lower facing edges of the wall elements 3 and 4 bear against each other to define a longitudinal seal. The wall elements 3 and 4 are held in recesses machined in end frames 5 and 6 as shown in Fig. 3 and support lugs which locate clevis pins 7 and 8 respectively. Clevis pins 7 and 8 are attached to hydraulic cylinders 9 and 10 respectively. Hydraulic cylinder 9 is connected to a plate 11 which is attached to frame tie bars 12 and 13. Hydraulic cylinder 10 is connected to plate 14 which is attached to tie bars 15 and 16. The plates 11 and 14 are located between the end frames 5, 6 and the tie bars 12, 13, 15 and 16 extend for the length of the machine as shown in Fig. 3. The end frame 6 may slide on the tie bars in either direction but the end frame 5 cannot move to the right in Fig. 3 because of tubular sleeves slipped over the tie bars.

At the top of the mixing chamber are plates 17 and 18 which extend between the end frames 5 and 6 and which have rubber seals 19 and 20 respectively. These seals are held against the wall elements 3 and 4 by air pressure during mixing. After a mixing cycle has been completed, air pressure is removed from the seals and actuation of the hydraulic cylinders 9 and 10 rotates wall element 3 and 4 about the axes of the rotors 1 and 2 respectively until a discharge aperture is created.

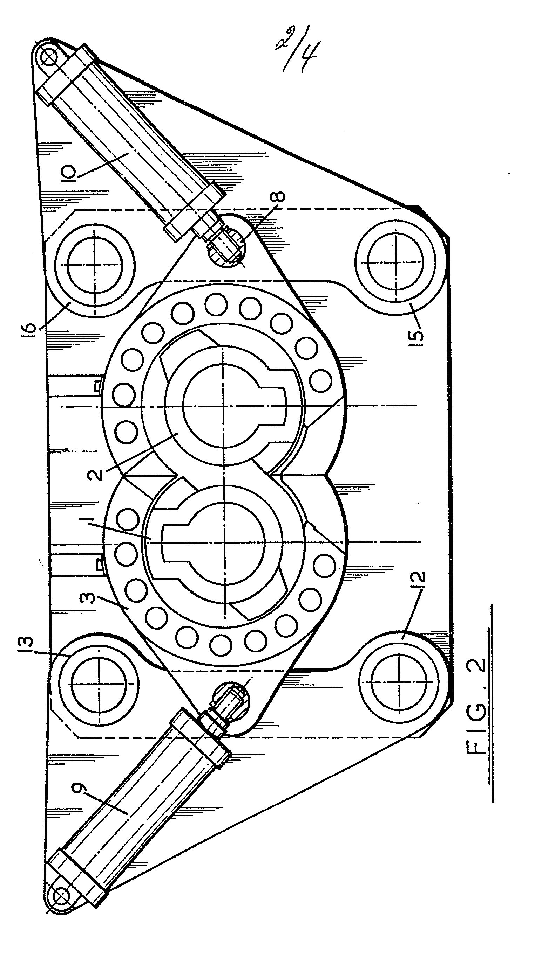

Fig. 2 shows the same cross-section as Fig. 1 but with the wall elements 3 and 4 fully rotated to define the maximum discharge aperture beneath the rotors.

Fig. 3 shows a cross-section through the centre of the machine on line '3-3' in Fig. 1. The rotor 1 and bearing plates 21 and 22 on which the rotor shaft is supported are however shown in perspective rather than section. Fig. 3 shows end frame 6 which bears against wall element 3. End frame 6 is held against the wall element 3 by two or more hydraulic piston and cylinders

7.

(not shown). The end frame 6 is subjected to substantial hydraulic pressure which is transmitted through the mixing chamber to the fixed end frame 5 whilst mixing is taking place, but after the mixing cycle has been completed this pressure is substantially reduced to allow the wall elements 3 and 4 to be rotated. It can be seen that end frames 5 and 6 have recesses into which four end plates are inserted. (Only three plates 23,24 and 25 can be seen in the drawings). The end plates are held against the side of the wall elements 3 and 4 due to the pressure exerted against frame 6 and thus circumferential seals are defined between the end plates and the wall elements.

The wall elements 3 and 4 and the end plates such as 23 are manufactured from a hard wear resistant material. The wall elements can be chilled or oil hardened spheroidal graphite cast iron and the end plates can be made in a nitro-carburized chrome molybdenum steel or a high chrome air hardening cast iron.

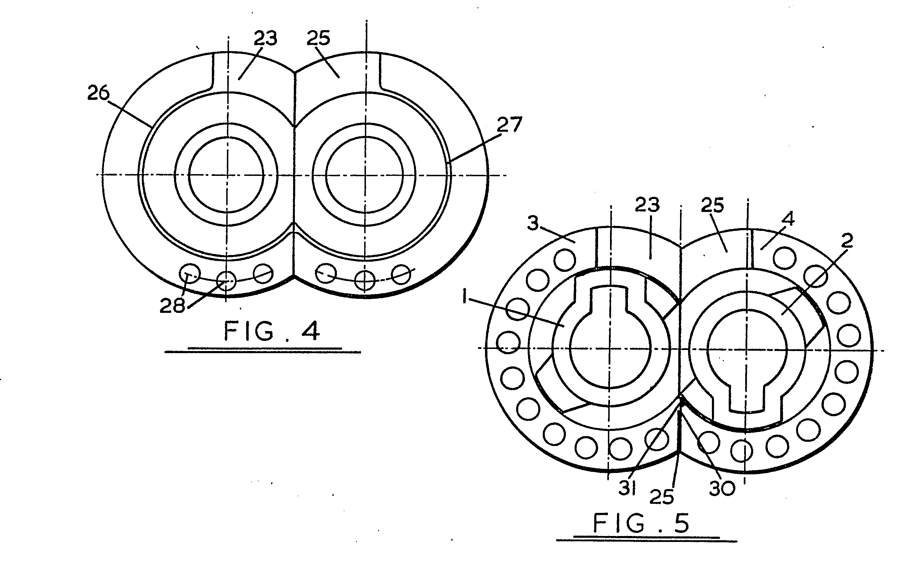

Fig. 4 shows an end view of end plates 23 and 25 showing the pressure lands 26 and 27 which extend around the inner lip of the plates for a circumferential distance corresponding to the circumferential length of the mixing chamber wall elements 3 and 4. As the pressure plates are forced against the axial ends of the mixing chamber wall elements the loading per unit area on the land faces is very high so as to squeeze out any material such as rubber which might get between the sealing faces. It can be seen that there are a number of holes 28 which communicate with the machine surroundings and allow any material which leaks past the circumferential sealing faces to escape through into matching holes 29 (Figs. 1 and 3) in the end frames 5 and 6 and thence to escape from the vicinity of the mixing machine. Similarly, any material which leaks past the longitudinal seal defined by the facing edges of the wall elements can drop away from the mixing chamber. Thus there is substantially no danger of leaked material adversely affecting operation of the machine.

Fig. 5 shows a cross-section through the wall elements 3 and 4 illustrating how the movement of the wall elements can be phased to give a self-cleaning action on the longitudinal sealing faces 30. It will be noted that the wall element 3 has a longitudinal sealing edge defined by a raised land 31 which bears against a flat sealing surface on wall element 4. When the wall elements are being moved to the closed position ready for a mixing cycle, wall element 3 is moved slightly past its normal centre (closed) position against a suitable stop (not shown) with the actuating hydraulic cylinder operating with low pressure. Wall element 4 is then moved with the actuating hydraulic cylinder operating under a higher pressure so as to push wall element 3 back to its centre position. When wall element 3 reaches this position wall element 4 will then be up against a suitable stop (not shown). It can be seen that in pushing wall element 3 back into position, a sliding action will take place on the sealing faces which

9.

will remove any material adhering to these faces. When both mixing chambers are in their final positions, maximum pressure is applied to the hydraulic cylinders to ensure a good seal between the faces 30.

In the embodiment described, the end frames 5 and 6 have a first annular section 32 (Fig. 3) cut away to receive end plates 23, 24 and 25 and a second annular section 33 cut away to a greater depth to receive wear plates 34. Seals (not shown) are provided to prevent material leaking out of the mixing chamber around the rotor axes. The seals are of conventional type and are not therefore described in detail herein. The section 32 has to be cut away so that the radially outer surface of the axial ends of the mixing chamber wall elements 3 and 4 can be supported by surfaces 35. The machining of the end frames must be accurate and the end frames must be of considerable thickness to withstand the hydraulic forces transmitted to the end plates 23, 24, 25 through the end frames. Thus the end frames 5 and 6 are relatively costly items.

As an alternative to the illustrated arrangement of the end frames 5 and 6, the mixing chamber wall elements 3 and 4 could be supported in apertures in support plates rigidly fixed to the machine frame and positioned at right angles to the rotor axes between the end frames 5 and 6. The end plates 23, 24, 25 could then be placed on the surface of the end frames and it would not be necessary to cut away the section 32. Furthermore any material which did leak out between the wall elements and the end plates could easily drop down beneath the machine so that the holes 28 could be dispensed with.

It will be appreciated that, as in the case of conventional mixing machines, a ram may be used to close the feed aperture during a mixing operation. The face of the ram is shaped to define two part-cylindrical surfaces so that when it is pushed fully into the feed aperture defined between the plates 17 and 18 (Fig. 3) its surfaces lie closely adjacent to the surfaces of the rotors. It is of course necessary to at least partially retract the ram prior to discharging the contents of the mixing chamber so that clearance is provided to enable the mixing chamber wall elements 3 and 4 to rotate.

11.

CLAIMS:

1. A mixing machine comprising a mixing chamber and at least one rotor rotatable within the mixing chamber about a predetermined axis, characterised in that the mixing chamber comprises two end plates arranged at opposite ends of the said axis and at least two wall elements located between the end plates, at least one of the wall elements being rotatable about an axis parallel to said predetermined axis between a first position in which facing edges of the wall elements contact each other to define a longitudinal seal and a second position in which a discharge aperture is defined between said facing edges, the wall elements making contact with the end plates when the said at least one rotatable wall element is in the first position to define circumferential seals, the said seals being positioned such that any material leaking from them is in direct communication with the machine surroundings and can easily escape from the vicinity of the mixing chamber.

2. A mixing machine according to claim 1, comprising two wall elements each of which is rotatable.

3. A mixing machine according to claim 2, comprising a single rotor, wherein both the wall elements are rotatable about the rotor axis.

4. A mixing machine according to claim 2, comprising two rotors, wherein the wall elements are rotatable about respective rotor axes.

5. A mixing machine according to any preceding claim, comprising means for forcing the end plates towards each other to thereby trap the wall elements between the end plates and provide a good seal therebetween.

6. A mixing machine according to any preceding claim, wherein the wall elements are supported in recesses machined into end frames which support the end plates, apertures being provided in the end plates and the end frames to enable the escape of material leaking through the circumferential seals.

7. A mixing machine according to any one of claims 1 to 5, wherein the wall elements are supported in appertures in separate support plates.

8. A mixing machine according to any preceding claim, wherein the or each rotor is supported in two bearing plates linked by tie bars, and all the other components of the machine are supported directly or indirectly by the tie bars.

9. A mixing machine according to any preceding claim, comprising two plates extending parallel to the seal axis to define therebetween a feed aperture, the plates supporting sealing means which bear against outer surfaces of the wall elements.

FIG. I

FIG . 2

FIG . 3

3/4

0084426

FIG . 4

FIG . 5

4/4